# EUROPÄISCHE PATENTSCHRIFT

(11) **EP 0 287 550 B1**
(45) Veröffentlichungstag und Bekanntmachung des Hinweises auf die Patenterteilung: **25.05.1994**
(21) Anmeldenummer: 88890056.0
(22) Anmeldetag: 16.03.1988
(51) Int. Cl.: C21C 5/52, F27D 17/00

(54) **Zelle für ein metallurgisches Gefäss**
Cabin for a metallurgical vessel
Cabine pour un récipient métallurgique

(30) Priorität: 09.04.1987 AT 871/87
(43) Veröffentlichungstag der Anmeldung: 19.10.1988
(73) Patentinhaber: VOEST-ALPINE INDUSTRIEANLAGENBAU GMBH, 4020 Linz (AT)
(72) Erfinder: Weber, Alfred, A-4222 St. Georgen/Gusen (AT); Aglas, Johann, A-4492 Hofkirchen 83e (AT); Hochgatterer, Franz, A-4320 Perg (AT)
(74) Vertreter: Hübscher, Heiner, Dipl.-Ing.

(56) Entgegenhaltungen:
- DE-A- 2 935 297
- DE-A- 3 044 258
- STAHL UND EISEN, Band 104, Nr. 5, 5. März 1984, Seiten 235-239, Düsseldorf, DE; K. GRUBER et al.: "Einsatz enger Elektroofen-Einhausungen zur Abgaserfassung und Lärmminderung; Betriebserfahrungen an zwei 50-t-Lichtbogen- und zwei 15-t-Induktionsöfen"
- STAHL UND EISEN, Band 100, Nr. 2, 28. Januar 1980, Seiten 53-58, Düsseldorf, DE; H.-U. HAERING et al.: "Lärmminderung in Elektrostahlwerken und Hinweise für die Projektplanung"

## Beschreibung

Die Erfindung bezieht sich auf eine Zelle für ein metallurgisches Gefäß mit wenigstens einer verschließbaren Chargieröffnung in einer Zellenwand für einen Chargierkorb und mit einem innerhalb der Zelle vorgesehenen Beschickungskran zur Förderung des Chargierkorbes zwischen einer Wartestellung innerhalb der Zelle und dem mit einem öffenbaren Deckel versehenen metallurgischen Gefäß.

Um die Umweltbelastung durch Rauchgase und Lärm beim Beschicken eines metallurgischen Gefäßes, wie es durch einen Elektroofen dargestellt wird, zu begrenzen, ist es bekannt (Grubert, K. H.; Haering, H.-U.; Marchand, D.; Muth, S.: Einsatz enger Elektroofen-Einhausungen zur Abgaserfassung und Lärmminderung, Stahl und Eisen 104 (1984) Nr. 5, S. 235 bis 239), den Elektroofen in eine ihn umschließende Zelle einzusetzen, die zwischen dem Ofen und einer eine verschließbare Chargieröffnung aufweisenden Zellenwand Raum zur Aufnahme eines Chargierkorbes bietet, der mit Hilfe eines außerhalb der Zelle angeordneten Beschickungskranes durch die Chargieröffnung in der Zellenwand in eine Wartestellung gebracht werden kann, damit bei im wesentlichen geschlossener Zelle der Deckel des Ofens abgehoben und für die Beschickung vom Ofengefäß weggeschwenkt werden kann, so daß die aus dem Ofengefäß austretenden Rauchgase innerhalb der Zelle abgesaugt werden können und die Chargieröffnung in der Zellenwand nur bei geschlossenem Ofendeckel geöffnet werden muß. Nachteilig bei dieser bekannten Zelle ist vor allem, daß die am Gehänge zur Aufnahme des Chargierkorbes angreifenden Seile des Beschickungskranes in der Zellendecke eine von der Chargieröffnung in der Zellenwand ausgehende und zumindest bis zur Gefäßmitte reichende Durchtrittsöffnung erfordern, durch die die aus dem geöffneten Ofengefäß aufsteigenden Rauchgase in die Gießhalle austreten können. Dazu kommt noch, daß bei geöffneter Chargieröffnung das Zelleninnere unmittelbar mit der Gießhalle in Verbindung steht, was beispielsweise ein Einbringen eines vollen Chargierkorbes in die Zelle oder ein Austragen eines bereits entleerten Chargierkorbes aus der Zelle während der Ofenbeschickung ausschließt.

Schließlich ist es bekannt (DE-A-3 044 258), eine Ofenhalle mit Hilfe einer schallgedämmten Lärmzelle einzuschließen, so daß der Beschickungskran zur Förderung des Chargierkorbes innerhalb der Lärmzelle vorgesehen ist. Da zum Einbringen der Chargierkörbe in die Lärmzelle ein Wagen dient, der durch eine Beschickungsöffnung in der Zelle fährt, ist eine Korbförderung in die oder aus der Lärmzelle während der Ofenbeschickung nicht möglich, ohne einen Rauchgasaustritt aus der Lärmzelle durch die Beschickungsöffnung in Kauf zu nehmen.

Der Erfindung liegt somit die Aufgabe zugrunde, eine Zelle für ein metallurgisches Gefäß der eingangs geschilderten Art so auszugestalten, daß auch während der Beschickung des metallurgischen Gefäßes ohne Umweltbelastung ein Chargierkorb in die Zelle eingebracht oder aus der Zelle ausgebracht werden kann.

Die Erfindung löst die gestellte Aufgabe dadurch, daß die Zelle für die Wartestellung des Chargierkorbes zumindest eine Schleusenkammer umfaßt, die einerseits an die Chargieröffnung in der Zellenwand anschließt und anderseits eine verschließbare Durchtrittsöffnung für den Chargierkorb in der Kammerdecke aufweist.

Die zur Vermeidung eines Rauchgasaustrittes aus der Zelle vorteilhafte Anordnung des Beschickungskranes innerhalb der Zelle macht zwar einen Förderwagen oder ein anderes Fördermittel zum Einbringen des Chargierkorbes in die Zelle bzw. zum Ausfahren des Chargierkorbes notwendig, doch wird mit dieser vom Beschickungskran unabhängigen Förderung des Chargierkorbes der Vorteil erreicht, daß während der Beschickung des metallurgischen Gefäßes mit Hilfe des Beschickungskranes ein voller Chargierkorb in die Zelle eingebracht oder ein leerer Chargierkorb aus der Zelle ausgetragen werden kann, und zwar ohne Gefahr einer zusätzlichen Umweltbelastung, weil für die Wartestellung der Chargierkörbe zumindest eine Schleusenkammer innerhalb der Zelle vorgesehen ist, die an die Chargieröffnung in der Zellenwand anschließt. Bei geschlossener Chargieröffnung kann der in der Schleusenkammer befindliche Chargierkorb mit Hilfe des Beschickungskranes durch die geöffnete Durchtrittsöffnung in der Kammerdecke aus der Schleusenkammer in das das metallurgische Gefäß aufnehmende Zelleninnere gefördert werden. Nach dem Schließen dieser Durchtrittsöffnung in der Decke der Schleusenkammer ist die Schleusenkammer durch die geöffnete Chargieröffnung frei zugänglich, ohne den dichten Abschluß der Zellen zu beeinträchtigen. Um eine Schall- und Wärmedämmung der Zelle auch bei geöffneter Chargieröffnung sicherzustellen, kann die Schleusenkammer in ähnlicher Weise wie die Zelle selbst eine Schall- und Wärmeisolierung aufweisen.

Damit während der Beschickung des metallurgischen Gefäßes oder während einer Vorbehandlung des Beschickungsgutes innerhalb der Zelle ein voller Chargierkorb in die Schleusenkammer eingebracht werden kann, ohne die Ausförderung des während der Gefäßbeschickung entleerten Chargierkorbes zu beeinträchtigen, kann die Schleusenkammer für die Aufnahme von zwei Chargierkörben ausgelegt sein. Besonders vorteilhafte Bedingungen ergeben sich jedoch, wenn zwei Schleusenkammern vorgesehen werden, deren Chargieröffnungen und gegensinnig dazu deren Durchtrittsöffnungen in der Kammerdecke abwechselnd öffen- und schließbar sind. Durch diese Maßnahme ist stets eine Schleusenkammer gegenüber dem Zelleninneren offen und gegenüber dem Zellenäußeren geschlossen, während die jeweils andere Schleusenkammer bei geöffneter Chargieröffnung gegenüber dem Zelleninneren verschlossen ist. Werden nach dem Einbringen je eines Chargierkorbes in die beiden Schleusenkammern die Verschlüsse für die Durchtrittsöffnungen in der Kammerdecke und für die Chargieröffnungen in der Zellenwand gegensinnig betätigt, so kann der von außen in die eine Schleusenkammer eingebrachte Chargierkorb durch den Beschickungskran erfaßt und der vom Beschickungskran in der anderen Schleusenkammer abgestellte Chargierkorb aus der Schleusenkammer und der Zelle ausgefahren werden. Diese Möglichkeit der Chargierkorbein- und -ausbringung bietet besondere Vorteile, wenn das Beschickungsgut vor dem Einbringen in das metallurgische Gefäß mittels der Rauchgase aus diesem Gefäß getrocknet und vorgewärmt werden soll, weil zu diesem Zweck die vollen Chargierkörbe einer zusätzlichen Handhabung bedürfen und mit Hilfe des Beschickungskranes der Einrichtung zum Vortrocknen und Vorwärmen zugefördert werden müssen, wobei beim Einsetzen der Chargierkörbe in diese Einrichtung und beim Entnehmen der Chargierkörbe wiederum mit einem Rauchgasaustritt in das Zelleninnere gerechnet werden muß.

Das abwechselnde Schließen und Öffnen einerseits der Durchtrittsöffnungen in der Kammerdecke und anderseits der Chargieröffnungen in der Zellenwand kann in einfacher Weise dadurch gewährleistet werden, daß die Schleusenkammern in Betätigungsrichtung der Verschlüsse sowohl der Chargieröffnungen als auch der Durchtrittsöffnungen in der Kammerdecke unmittelbar nebeneinander angeordnet sind und daß die beiden Chargieröffnungen und die beiden Durchtrittsöffnungen je einen gemeinsamen Verschluß aufweisen. Da dieser gemeinsame Verschluß nur eine der beiden abwechselnd öffen- bzw. schließbaren Öffnungen verschließen kann, muß zwangsläufig die jeweils andere Öffnung offen stehen. Voraussetzung für einen gemeinsamen Verschluß der beiden zugehörigen Öffnungen ist allerdings, daß die beiden Schleusenkammern in Betätigungsrichtung der Verschlüsse nebeneinander angeordnet sind. Bei Schiebeverschlüssen sind demnach die Schleusenkammern in Richtung der Verschiebebewegung nebeneinanderzureihen, während bei Schwenkverschlüssen die Schwenkachse zwischen den beiden Schleusenkammern liegen muß, um den angestrebten Effekt sicherzustellen.

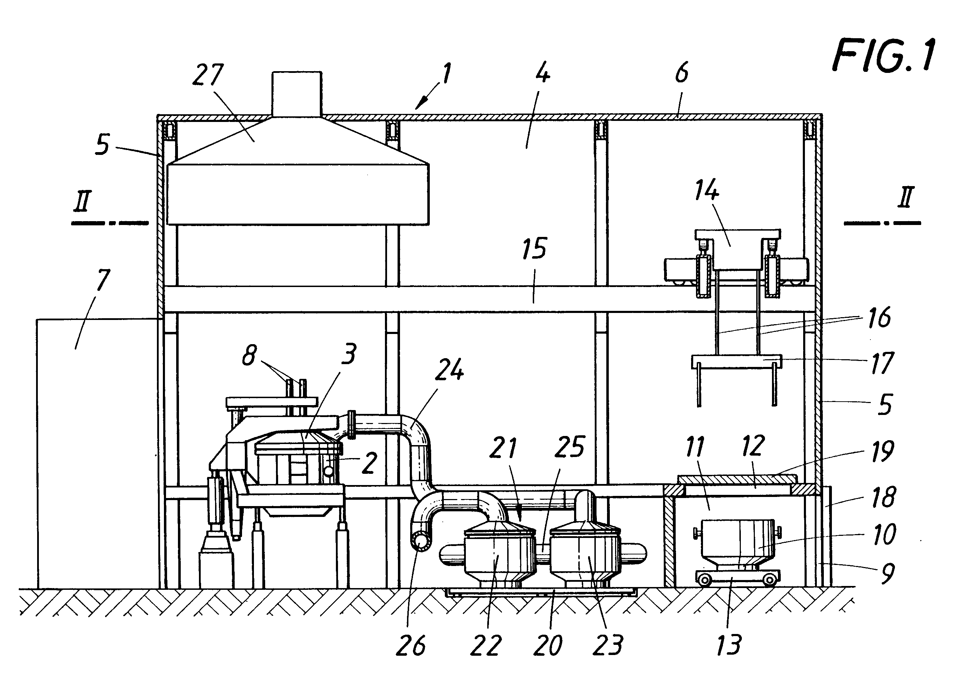

In der Zeichnung ist der Erfindungsgegenstand beispielsweise dargestellt. Es zeigen
- Fig. 1: eine erfindungsgemäße Zelle für ein metallurgisches Gefäß in einem schematischen Längsschnitt,

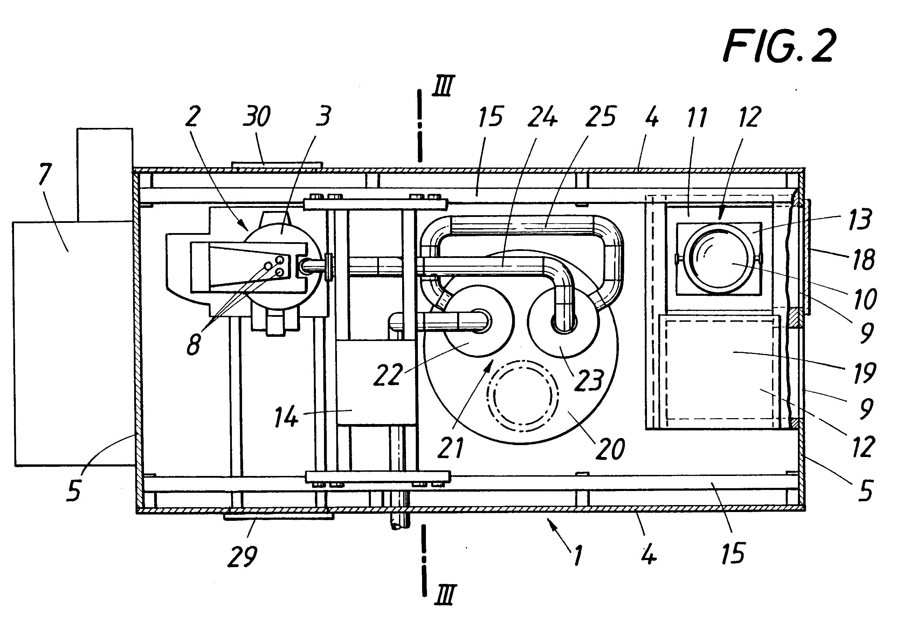

- Fig. 2: diese Zelle in einem Schnitt nach der Linie II-II der Fig. 1, allerdings mit einer veränderten Stellung des Beschickungskranes, und

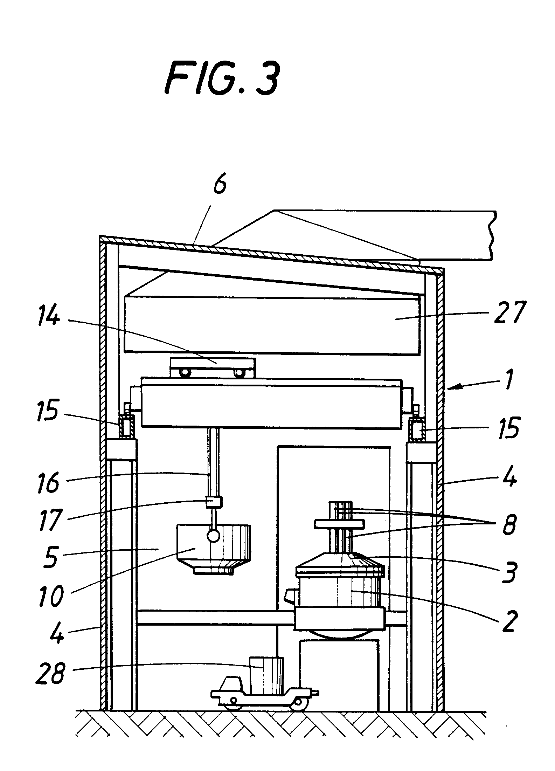

- Fig. 3: einen Schnitt nach der Linie III-III der Fig. 2.

Die dargestellte Zelle 1 für ein metallurgisches Gefäß 2, das durch einen Elektroofen mit einem abhebbaren und von Ofengefäß wegschwenkbaren Deckel 3 gebildet wird, wird durch zwei Seitenwände 4 und zwei Stirnwände 5 sowie eine Decke 6 gebildet. An der dem metallurgischen Gefäß 2 näheren Stirnwand 5 ist ein Transformator 7 für den Anschluß der Elektroden 8 des Elektroofens angebaut. An der gegenüberliegenden Stirnwand 5 befinden sich zwei Chargieröffnungen 9 zum Ein- und Ausbringen von Chargierkorben 10. Im Gegensatz zu bekannten Zellen 1 geben die Chargieröffnungen 9 nicht unmittelbar den Weg in das Zelleninnere frei, sondern führen in je eine Schleusenkammer 11, in deren Decke eine Durchtrittsöffnung 12 für die Chargierkörbe 10 vorgesehen ist. Die Chargierkörbe 10 werden mit Hilfe von Förderwagen 13 in die Schleusenkammern 11 durch die Chargieröffnungen 9 eingefahren und können mit Hilfe eines Beschickungskranes 14 aus den Schleusenkammern 11 durch die Durchtrittsöffnungen 12 in der Kammerdecke gehoben werden. Da der Beschickungskran 14 mit seiner Fahrbahn 15 innerhalb der Zelle 1 angeordnet ist, brauchen die Kranseile 16 für das die Chargierkörbe 10 aufnehmende Gehänge 17 nicht durch die Decke 6 der Zelle 1 hindurchgeführt zu werden, was einen weitgehend gasdichten Abschluß der Zelle 1 erlaubt.

Den Chargieröffnungen 9 ist ein gemeinsamer Verschiebeverschluß 18 zugeordnet, so daß durch diesen Verschiebeverschluß 18 stets eine der beiden Chargieröffnungen 9 verschlossen ist, während die andere Chargieröffnung offen steht. In ähnlicher Weise können die beiden Durchtrittsöffnungen 12 in der Decke der beiden Schleusenkammern 11 durch einen gemeinsamen Verschiebeverschluß 19 abwechselnd verschlossen und geöffnet werden, und zwar jeweils gegensinnig zu den Chargieröffnungen 9. Durch diese einfache Maßnahme wird sichergestellt, daß stets eine der beiden Schleusenkammern 11 bei verschlossener Chargieröffnung 9 gegen das Zelleninnere hin offen steht, während die jeweils andere Schleusenkammer gegenüber dem Zelleninneren abgedichtet und von außerhalb der Zelle 1 zugänglich ist. Durch die geöffnete Chargieröffnung 9 der einen Schleusenkammer 11 kann somit ein voller Chargierkorb 10 in diese Schleusenkammer eingebracht oder ein leerer Chargierkorb ausgebracht und gleichzeitig ein voller Chargierkorb aus der anderen Schleusenkammer 11 mit Hilfe des Beschickungskranes 14 herausgehoben oder ein leerer Chargierkorb in dieser Schleusenkammer abgestellt werden.

Der in die eine Schleusenkammer 11 eingebrachte volle Chargierkorb wird nach dem Öffnen des Verschiebeverschlusses 19 für die Durchtrittsöffnung 12 und einem Verschließen der Chargieröffnung 9 durch den Verschiebeverschluß 18 mit Hilfe des Beschickungskranes 14 aus der Schleusenkammer herausgehoben und auf einen Drehteller 20 abgesetzt, mit dessen Hilfe der abgesetzte Chargierkorb 10 einer Einrichtung 21 zum Trocknen und Vorwärmen des Beschickungsgutes zugeführt wird. In dieser Einrichtung 21 wird das im Chargierkorb befindliche Beschickungsgut in zwei Stufen 22 und 23 mit den Rauchgasen aus dem metallurgischen Gefäß 2 behandelt. Die heißen Rauchgase werden zu diesem Zweck über eine Zuleitung 24 der Stufe 23 zugeführt, von wo sie zur Vorwärmung in der Stufe 22 über die Verbindungsleitung 25 abgezogen werden, um nach der Absaugung aus der Stufe 22 über die Abzugsleitung 26 aus der Zelle 1 herausgeführt zu werden.

Nach der Vorwärmung des Beschickungsgutes, üblicherweise Schrott, wird der Chargierkorb der Einrichtung 21 mit Hilfe des Beschickungskranes 14 wieder entnommen und bei geöffnetem Deckel 3 in den Elektroofen entleert. Die dabei entstehenden Rauchgase werden über eine Absaughaube 27 aus der Zelle 1 abgesaugt. Für das Ausfahren der Stahlpfanne 28 ist eine verschließbare Öffnung 29 in der einen Seitenwand 4 der Zelle 1 vorgesehen. Die Schlackenpfanne kann über eine ebenfalls verschließbare Öffnung 30 in der gegenüberliegenden Seitenwand 4 aus der Zelle 1 ausgebracht werden. Die Zelle 1 kann daher trotz eines unbehinderten Ein- und Aus-bringens der Chargierkörbe 10 auch während einer Rauchgasentwicklung im Inneren der Zelle 1 soweit verschlossen gehalten werden, daß eine Umweltbelastung durch Rauchgase, Lärm oder Hitze ausgeschlossen werden kann. Die Zuschlagstoffe und Legierungen können über entsprechende Zuleitungen von außerhalb der Zelle 1 in das metallurgische Gefäß 2 eingebracht werden. Die Zelle 1 braucht daher während des üblichen Ofenbetriebes nicht betreten zu werden.

## Patentansprüche

1. Zelle (1) für ein metallurgisches Gefäß (2) mit wenigstens einer verschließbaren Chargieröffnung (9) in einer Zellenwand (5) für einen Chargierkorb (10) und mit einem innerhalb der Zelle (1) vorgesehenen Beschickungskran (14) zur Förderung des Chargierkorbes (10) zwischen einer Wartestellung innerhalb der Zelle (1) und dem mit einem öffenbaren Deckel (3) versehenen metallurgischen Gefäß (2), dadurch gekennzeichnet, daß die Zelle (1) für die Wartestellung des Chargierkorbes (10) zumindest eine Schleusenkammer (11) umfaßt, die einerseits an die Chargieröffnung (9) in der Zellenwand (5) anschließt und anderseits eine verschließbare Durchtrittsöffnung (12) für den Chargierkorb (10) in der Kammerdecke aufweist.

2. Zelle nach Anspruch 1, gekennzeichnet durch zwei Schleusenkammern (11), deren Chargieröffnungen (9) und gegensinnig dazu deren Durchtrittsöffnungen (12) in der Kammerdecke abwechselnd öffen- und schließbar sind.

3. Zelle nach Anspruch 1 oder 2, dadurch gekennzeichnet, daß die Schleusenkammern (11) in Betätigungsrichtung der Verschlüsse (18, 19) sowohl der Chargieröffnungen (9) als auch der Durchtrittsöffnungen (12) in der Kammerdecke unmittelbar nebeneinander angeordnet sind und daß die beiden Chargieröffnungen (9) und die beiden Durchtrittsöffnungen (12) je einen gemeinsamen Verschluß (18, 19) aufweisen.

## Claims

1. A cell (1) for a metallurgical vessel (2) having at least one closable charging aperture (9) in a cell wall (5) for a charging basket and with a loading crane (14) provided inside the cell (1) to convey the charging basket (10) between a stand-by position within the cell (1) and the metallurgical vessel (2) provided with an openable lid (3), characterised in that the cell (1) comprises for the stand-by position of the charging basket (10) at least one lock chamber (11) which at one end adjoins the charging aperture (9) in the cell wall (5) and at the other end has a closable passage aperture (12) for the charging basket (10) in the chamber roof.

2. A cell according to claim 1, characterised by two lock chambers (11), the charging apertures (9) of which and, in the opposite direction thereto, the passage apertures (12) of which in the chamber roof are alternately openable and closable.

3. A cell according to claim 1 or 2, characterised in that the lock chambers (11) are disposed directly side by side in the direction of actuation of the closures (18, 19) of both the charging apertures (9) and of the passage apertures (12) in the chamber roof, and in that the two charging apertures (9) and the two passage apertures (12) each have a common closure (18, 19).

## Revendications

1. Cellule (1), pour un récipient métallurgique (2), avec au moins une ouverture de chargement (9) obturable ménagée dans une paroi de cellule (5), pour un panier de chargement (10), et avec une grue de chargement (14), prévue à l'intérieur de la cellule (1), en vue de transporter le panier de chargement (10), entre une position d'attente à l'intérieur de la cellule (1) et le récipient métallurgique (2), pourvu d'un couvercle (3) pouvant être ouvert, caractérisée en ce que la cellule (1) comprend, pour la position d'attente du panier de chargement (10), au moins une chambre à écluse (11), se raccordant d'une part à l'ouverture de chargement (9) ménagée dans la paroi de cellule (5) et, d'autre part, présentant une ouverture de passage (12) pouvant être obturée, pour le panier de chargement (10) et réalisée dans le plafond de chambre.

2. Cellule selon la revendication 1, caractérisée par deux chambres (11) à écluse, dont les ouvertures de chargement (9) et les ouvertures de passage (12) dans le plafond de chambre, sont susceptibles d'être ouvertes et obturées alternativement. les secondes en sens inverse des premières.

3. Cellule selon la revendication 1 ou 2, caractérisée en ce que les chambres à écluse (11) sont disposées directement les unes à côté des autres dans la direction d'actionnement des fermetures (18, 19), aussi bien des ouvertures de chargement (9) qu'également des ouvertures de passage (12) ménagées dans le plafond de chambre, et en ce que les deux ouvertures de chargement (9) et les deux ouvertures de passage (12) présentent chacune une fermeture (18, 19) commune,
